# EUROPEAN PATENT APPLICATION

(11) **EP 3 643 944 A1**
(43) Date of publication of application: **29.04.2020**
(21) Application number: 18820421.8
(22) Date of filing: 11.06.2018
(51) Int. Cl.: F16F 9/58, B62K 25/08, F16F 9/32

(54) **DAMPER**

(30) Priority: 20.06.2017 JP 2017120113
(71) Applicant: KYB Motorcycle Suspension Co., Ltd., Kani-shi, Gifu 509-0206 (JP)
(72) Inventor: NOGUCHI Nobuhiro, Kani-shi Gifu 509-0206 (JP)
(74) Representative: MFG Patentanwälte Meyer-Wildhagen Meggle-Freund Gerhard PartG mbB
(86) International application number: PCT/JP2018/022184
(87) International publication number: WO 2018/235645

(57) **Abstract**

A damper includes a cylinder (30), a piston rod (32) axially movably inserted into the cylinder (30), and a spring member (4) that is provided on an outer circumference of the piston rod (32) and between the piston (31) and a rod guide (33) coming close to each other when extended, and biases the piston (31) and the rod guide (33) in a direction to separate them from each other when compressed. The spring member (4) includes a first spring (5), a second spring (6) that is arranged in series with the first spring (5), and a restricting portion (7) that restricts contraction of the first spring (5) before the first spring (5) and the second spring (6) reach their close contact heights.

## Description

### Technical Field

The present invention relates to improvements in dampers.

### Background Art

Conventionally, dampers include a plurality of types of springs having different functions (applications) such as suspension springs, extension springs, and balance springs.

For example, as disclosed in JP 2013-108542 A, an extension spring is compressed as the damper approaches the maximum extension state to exert elastic force and bias the damper in the contraction direction. Therefore, the extension operation of the damper is interrupted by the extension spring to reduce the extension speed and relieve the impact at the maximum extension.

As disclosed in, for example, JP 2010-185572 A, a balance spring is used for a damper that employs a suspension spring that elastically supports a vehicle body as an air spring, and exerts elastic force offsetting the elastic force of the air spring at the maximum extension of the damper. When such a balance spring is provided, the combined characteristics of the spring characteristics of the air spring and the spring characteristics of the balance spring can be made close to the spring characteristics of a suspension spring formed of a coil spring, and the ride quality of the vehicle can be improved.

### Summary of the Invention

Both the extension spring and the balance spring are provided between two members coming close to each other when the damper is being extended, and when compressed, bias the two members in a direction to separate them from each other to bias the damper in the contraction direction. Furthermore, the extension spring and the balance spring are compressed to exert elastic force when the amount of contraction of the damper becomes smaller than a predetermined amount, and do not function in a region where the amount of contraction of the damper is larger than the predetermined amount.

In a damper including a spring that, like the extension spring and the balance spring, functions in a part of the entire stroke region from the most extended state to the most contracted state of the damper, and biases the damper in the contraction direction (hereinafter referred to as an extension spring and the like), upon transitioning from a predetermined stroke region in which the extension spring and the like functions to a stroke region other than the predetermined stroke region, the spring characteristics of the damper as a whole change at the full extension of the extension spring and the like.

When the spring characteristics of the damper as a whole are switched in the middle of a stroke in this manner, it is preferable to suppress the occurrence of a sudden change in the spring characteristics. To address this, it is effective to switch the spring constant of the extension spring and the like in the middle to make the spring characteristics of the extension spring and the like two-stage characteristics. To make the spring characteristics of the extension spring and the like two-stage characteristics, a method of using an unequally pitched coil spring and a method of arranging a pair of springs having different lengths in parallel are possibly employed, but there are some cases where none of these methods can be adopted.

First, in the case of using an unequally pitched coil spring as the extension spring and the like, a small pitch portion with a smaller pitch is provided to a part of the coil spring, and the spring constant is switched when the wire material of the small pitch portion is in close contact during the compression. In other words, in the case of using an unequally pitched coil spring to obtain two-stage spring characteristics, it is necessary to bring the wire material of the small pitch portion into close contact. However, particularly the small pitch portion, in which the wire material is brought into close contact, is likely to involve buckling, and buckling of the extension spring and the like may damage the sliding portion of the damper. Furthermore, the wire diameter of the unequally pitched coil spring cannot be changed midway, resulting in a heavy weight.

Next, in the case of using a pair of springs arranged in parallel as the extension spring and the like, it is difficult to reserve the mounting space because they are bulky radially. For example, when the damper includes a cylinder and a piston rod entering and exiting the cylinder, and a pair of springs are arranged in parallel between the piston rod and the cylinder, the cylinder diameter and the piston rod diameter are generally predefined depending on the vehicle or the like carrying the damper, and the space for arranging a pair of springs in parallel between the cylinder and the piston rod cannot be reserved in some cases. Such a problem may also occur in the case where both the extension spring and the balance spring are provided in parallel in the cylinder as disclosed in JP 2010-185572 A.

Due to these circumstances, some conventional dampers may fail to achieve the two-stage spring characteristics of the spring member that biases the damper in the contraction direction in a predetermined stroke region. The present invention aims to provide a damper capable of solving such a problem and achieving two-stage spring characteristics of a spring member that biases a damper in a contraction direction in a predetermined stroke region.

To this end, a damper includes a spring member that is provided on an outer circumference of a shaft member axially movably inserted into a tube and between two members coming close to each other when extended, and biases the two members in a direction to separate the two members from each other when compressed. The spring member includes a first spring, a second spring that is arranged in series with the first spring, and a restricting portion that restricts contraction of the first spring before the first spring and the second spring reach close contact heights thereof.

### Brief Description of Drawings

Fig. 1 is a longitudinal sectional view schematically illustrating a damper according to a first embodiment of the present invention.
Fig. 2 is a partially enlarged longitudinal sectional view specifically illustrating a part of the damper according to the first embodiment of the present invention.
Fig. 3 is a diagram illustrating spring characteristics of the damper according to the first embodiment of the present invention.
Fig. 4 is a partially enlarged longitudinal sectional view illustrating a first modification of the damper according to the first embodiment of the present invention, illustrating changes.
Fig. 5 is a partially enlarged longitudinal sectional view illustrating a second modification of the damper according to the first embodiment of the present invention, illustrating changes.
Fig. 6 is a longitudinal sectional view schematically illustrating a damper according to a second embodiment of the present invention.
Fig. 7 is a diagram illustrating spring characteristics of the damper according to the second embodiment of the present invention.

### Description of Embodiments

Hereinafter, dampers according to embodiments of the present invention will be described with reference to the drawings. The same reference numerals in several figures indicate the same or corresponding parts.

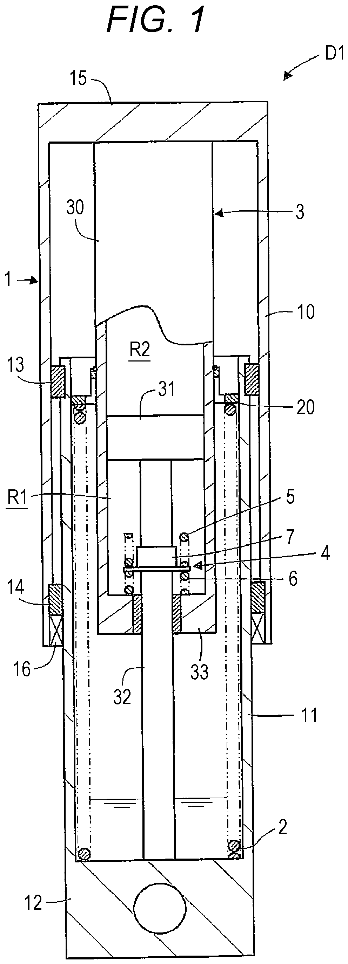

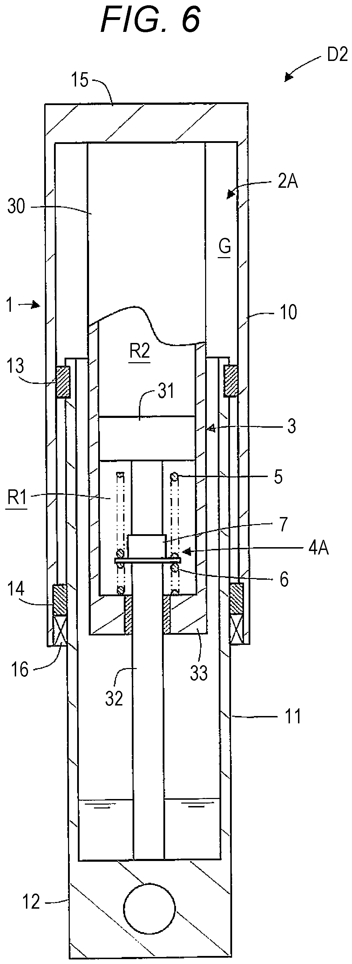

Dampers D1 and D2 according to an embodiment illustrated in Figs. 1 and 6 are used for a front fork for suspending a front wheel in a saddle-ride type vehicle, such as a two-wheeled vehicle or a three-wheeled vehicle. In the following description, "upper" and "lower" of the dampers D1 and D2 according to the present embodiment in a state where the front fork provided with the dampers D1 and D2 is mounted on a vehicle are simply referred to as "upper" and "lower" of the dampers D1 and D2 unless otherwise specifically described.

### <First Embodiment>

As illustrated in Fig. 1, the damper D1 according to a first embodiment of the present invention includes a telescopic tube member 1 that has an outer tube 10 and an inner tube 11, a suspension spring 2 and a damper body 3 that are accommodated in the tube member 1 and interposed between the outer tube 10 and the inner tube 11, and a spring member 4 that is disposed between a piston 31 and a rod guide 33 coming close to each other when the damper body 3 is being extended and biases them in a direction to separate them from each other when compressed.

In the present embodiment, the tube member 1 is of an inverted type, and the outer tube 10 is disposed on the upper side (vehicle body side) and the inner tube 11 is disposed on the lower side (axle side). That is, in the present embodiment, the outer tube 10 is a vehicle body side tube, and the inner tube 11 is an axle side tube.

The outer tube 10 is connected to the vehicle body of a saddle-ride type vehicle via a vehicle body side bracket (not illustrated), and the inner tube 11 is connected to an axle of a front wheel of the saddle-ride type vehicle via an axle side bracket 12. Bushings 13 and 14 are provided between overlapping portions of the outer tube 10 and the inner tube 11, so that the inner tube 11 can slide smoothly in the outer tube 10. Then, when the front wheel vibrates up and down due to the vehicle traveling on a bumpy road surface or the like, the inner tube 11 moves in and out of the outer tube 10, and the damper D1 is extended and contracted.

An upper end opening of the outer tube 10 is closed by a cap 15. A lower end opening of the inner tube 11 is closed by the axle side bracket 12. Furthermore, a sealing member 16, such as an oil seal or a dust seal, is closes a portion between the overlapping portions of the outer tube 10 and the inner tube 11. As described above, in the damper D1 according to the present embodiment, the inside and the outside of the tube member 1 are partitioned to enclose liquid and gas in the tube member 1 and prevent them from leaking out of the tube member 1.

The damper body 3 accommodated in the tube member 1 has a cylinder 30, the piston 31 slidably inserted in the cylinder 30, a piston rod 32 having one end connected to the piston 31 and the other end protruding out of the cylinder 30, and the rod guide 33 having an annular shape, provided at one end portion of the cylinder 30, and slidably supporting the piston rod 32.

In the present embodiment, the damper body 3 is of an inverted type, and the cylinder 30 is disposed on and toward the upper side (vehicle body side) and the piston rod 32 is disposed on and toward the lower side (axle). The cylinder 30 is provided inside the outer tube 10 and is connected to the outer tube 10 via the cap 15. The lower end portion of the piston rod 32 projecting downward from the cylinder 30 is connected to the inner tube 11 via the axle side bracket 12.

Thus, the damper body 3 is interposed between the outer tube 10 and the inner tube 11, and when the damper D1 is extended and contracted, the piston rod 32 moves in and out of the cylinder 30 to extend and contract. When the damper body 3 is extended and contracted in this manner, the piston 31 moves up and down (axially) in the cylinder 30.

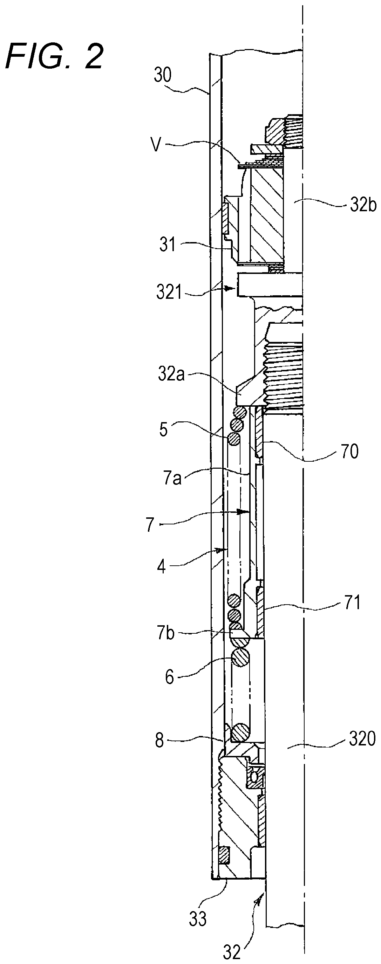

In the cylinder 30, a liquid such as hydraulic oil is accommodated. When the piston 31 moves up and down in the cylinder 30, liquid flows between two chambers R1 and R2 partitioned by the piston 31. The damper body 3 provides resistance to the flow of the liquid with a damping element provided to the piston 31 or the like, and exerts damping force that hinders the extension and contraction operation of the damper D1. The damping element may have any configuration, and thus a detailed description thereof is omitted. For example, a leaf valve V or the like stacked on the piston 31 as illustrated in Fig. 2 can be used.

Although not illustrated, in the cylinder 30, an inflatable and contractible air chamber is formed by a movable partition such as a free piston, a bladder, and a bellows. The air chamber compensates for the volume change in the cylinder corresponding to the volume of the piston rod entering and exiting the cylinder 30, and compensates for the volume change of the liquid due to the temperature change.

In addition, the structure of the damper body 3 can be changed as appropriate. For example, the damper body 3 may be of an erected type, the cylinder 30 may be disposed on and toward the axle side, and the piston rod 32 may be disposed on and toward the vehicle body side. Instead of the air chamber, for example, volume compensation may be performed in a liquid storage chamber that stores liquid inside. In this case, a reservoir tank separate from the cylinder 30 may be provided, and a liquid storage chamber may be formed in the reservoir tank, and when the damper body 3 is of an erected type, a portion between the tube member 1 and the damper body 3 may be used as a liquid storage chamber. Furthermore, the piston rod 32 may be extended on both sides of the piston 31 to make the damper body 3 into a double rod type.

Subsequently, the suspension spring 2 is accommodated in a portion between the tube member 1 and the damper body 3. The suspension spring 2 is a coil spring, and when compressed, is elastically deformed to exert elastic force corresponding to the amount of deformation. An upper end of the suspension spring 2 is supported by the outer tube 10 via a cylindrical spring receiving portion 20 provided on the outer circumference of the cylinder 30, the cylinder 30, and the cap 15. A lower end of the suspension spring 2 is supported by the inner tube 11 via the axle side bracket 12.

Thus, the suspension spring 2 is interposed between the outer tube 10 and the inner tube 11. When the damper D1 is contracted and the cylinder 30 enters the inner tube 11, the amount of deformation of the suspension spring 2 increases and the elastic force of the suspension spring 2 increases.

The elastic force of the suspension spring 2 acts in a direction to separate the outer tube 10 and the inner tube 11 and to extend the damper D1. In the damper D1 used in a vehicle, the suspension spring 2 elastically supports the vehicle body. Since the damper body 3 is extended as the damper D1 extends, it can be said that the suspension spring 2 biases the damper body 3 in the extension direction.

Furthermore, in the damper body 3, the spring member 4 is provided between the piston 31 and the rod guide 33, which are approached when the damper body 3 is extended. The spring member 4 has a first spring 5 and a second spring 6, that are formed of coil springs, and since these are elastically deformed when compressed, the spring member 4 exhibits the elastic force corresponding to the amount of deformation.

The elastic force of the spring member 4 acts in a direction to separate the piston 31 and the rod guide 33 and contract the damper D1. In the damper D1 according to the present embodiment, the spring member 4 functions as an extension spring. The extension spring is a spring for relieving the impact at the maximum extension of the damper D1, and functions when the damper D1 approaches the full extension (the maximum extension state).

Thus, the damper D1 according to the present embodiment includes the suspension spring 2 that urges the damper body 3 in the extension direction to elastically support the vehicle body, and the extension spring (spring member 4) that biases the damper body 3 in the contraction direction in the vicinity of the maximum extension to relieve impact at the maximum extension.

The spring member 4 includes the first spring 5 and the second spring 6 provided in series, and a restricting portion 7 that restricts the contraction of the first spring 5 before the first spring 5 and the second spring 6 reach their close contact heights.

The restricting portion 7 is slidably attached to the outer circumference of the piston rod 32. More specifically, as illustrated in Fig. 2, the restricting portion 7 includes a cylindrical guide 7a into which the piston rod 32 is inserted and an annular spring receiving portion 7b projecting radially outward from one axial end portion of the guide 7a.

In the present embodiment, annular bushings 70 and 71 are fitted on the inner circumferences of both axial end portions of the guide 7a, and the inner circumferences of the bushings 70 and 71 are in sliding contact with the outer circumference of the piston rod 32. Therefore, the restricting portion 7 can slide smoothly in the axial direction with respect to the piston rod 32. However, the bushings 70 and 71 can be omitted if good slidability of the restricting portion 7 can be ensured without them.

Both the first spring 5 and the second spring 6 are coil springs, and when compressed, they elastically deform and exert elastic force corresponding to the amount of deformation. The first spring 5 is disposed on the outer circumference of the guide 7a in a state where one end thereof is supported by the spring receiving portion 7b. The second spring 6 is provided on the side opposite to the first spring 5 with respect to the spring receiving portion 7b, and one end thereof is supported by the spring receiving portion 7b.

As described above, in the spring member 4 of the present embodiment, the first spring 5 on the guide 7a side and the second spring 6 on the opposite side sandwich the spring receiving portion 7b, and the first spring 5 and the second spring 6 are arranged in series. The piston rod 32 is inserted inside the first spring 5 and the second spring 6, which were arranged in series in this way.

Furthermore, in the present embodiment, the first spring 5 is provided on the upper side of the second spring 6, and an annular spring member receiving portion 8 is fitted on the outer circumference of the lower end portion of the second spring 6 located at the lower end portion of the spring member 4. The inner diameter of the spring member receiving portion 8 is larger than the outer diameter of the piston rod 32. The outer diameter of the spring member receiving portion 8 is a diameter that can be fitted to the inner circumference of the cylinder 30.

Therefore, when the piston rod 32 moves in the axial direction in the spring member 4, the spring member receiving portion 8 does not hinder this movement. Furthermore, since the outer circumference of the spring member receiving portion 8 is supported by the cylinder 30, the spring member receiving portion 8 can be prevented from being shifted radially and interfering with the piston rod 32.

As described above, since the lower end portion of the second spring 6 is fitted to the spring member receiving portion 8, the spring member receiving portion 8 can prevent the second spring 6 from being shifted radially in the cylinder 30. The first spring 5 and the restricting portion 7 are stacked above the second spring 6 extending upward from the spring member receiving portion 8. Furthermore, the restricting portion 7 is disposed such that the spring receiving portion 7b faces downward and the tip end of the guide 7a faces upward.

The axial length of the guide 7a extending upward from the spring receiving portion 7b is set to be shorter than the natural length (the axial length without load) of the first spring 5 standing on the spring receiving portion 7b and longer than a close contact height of the first spring 5 (the axial length in a state in which all the wire members of the coil spring are compressed to be brought into contact). Therefore, in an unloaded state, the upper end of the first spring 5 protrudes upward from the tip end of the guide 7a.

A stopper 32a is provided on the outer circumference of the piston rod 32 and on the upper side of the spring member 4 (on the side of the piston 31) so as to face the upper end of the first spring 5 and the tip end of the guide 7a.

More specifically, the piston rod 32 according to the present embodiment has a bar-like rod body 320 and a center rod 321 screwed to the outer circumference of the tip end portion of the rod body 320 and holding the piston 31 on the outer circumference. The stopper 32a is formed on the lower side (rod guide 33 side) of the center rod 321 with respect to the piston holding portion 32b, and the portion facing the spring member 4 is a flat surface.

The stopper 32a moves in the cylinder 30 together with the piston 31. When the damper D1 is extended and approaches the full extension and the piston 31 approaches the rod guide 33 to a certain extent, the stopper 32a abuts on the upper end of the first spring 5, and the spring member 4 is sandwiched and compressed between the stopper 32a and the rod guide 33. Then, the contraction of the first spring 5 and the second spring 6 causes the spring member 4 to contract, thereby exerting elastic force corresponding to the amount of this contraction. The elastic force of the spring member 4 refers to the elastic force of the entire spring member 4 including the first spring 5 and the second spring 6.

Furthermore, as described above, the axial length of the guide 7a protruding from the spring receiving portion 7b is longer than the close contact height of the first spring 5. Therefore, when the spring member 4 is compressed, the tip end of the guide 7a abuts against the stopper 32a before the first spring 5 reaches its close contact height, and the first spring 5 is prevented from being further contracted. Furthermore, as described above, the restricting portion 7 restricts the contraction of the first spring 5 before the first spring 5 and the second spring 6 reach their close contact height. Therefore, when the spring member 4 is further compressed while the contraction of the first spring 5 is restricted by the guide 7a, only the second spring 6 is contracted.

With the above-described configuration, assuming that the axial length of the spring member 4 when the tip of the guide 7a abuts against the stopper 32a is a predetermined length M, when the spring member 4 is longer than the predetermined length M, both the first spring 5 and the second spring 6, which are connected in series, function. Therefore, the spring constant of the entire spring member 4 including the first spring 5 and the second spring 6 (spring constant of the spring member 4) is the total spring constant of the first spring 5 and the second spring 6, which are connected in series.

By contrast, when the spring member 4 is smaller than the predetermined length M, only the second spring 6 functions. Therefore, the spring constant of the spring member 4 is the spring constant of the second spring 6 alone, and is larger than the total spring constant of the first spring 5 and the second spring 6. As described above, in the present embodiment, the spring characteristics of the spring member 4 can be two-stage characteristics in which a characteristic with a smaller spring constant is switched to a characteristic with a larger spring constant when the spring member 4 being compressed reaches the predetermined length M.

With the above-described configuration, even in the case where the spring characteristics of the spring member 4 are two-stage characteristics, the contraction of the first spring 5 is restricted before the first spring 5 reaches its close contact height and the spring constant is switched, whereby the occurrence of buckling of the first spring 5 can be suppressed. Furthermore, since the spring characteristics of the spring member 4 are two-step characteristics by utilizing two springs of the first spring 5 and the second spring 6, an optimum design can be made by setting the wire diameters and the like of the springs (the first spring 5 and the second spring 6) to a desired spring constant.

Furthermore, the amount of contraction of the first spring 5 can be limited by the guide 7a. Specifically, the contractible amount of the first spring 5 is the amount by which the first spring 5 protrudes upward from the guide 7a. Therefore, the contractible amount of the first spring 5 is easily checked at first glance, and it is easy to set the contractible amount. Furthermore, since the guide 7a is slidably attached to the outer circumference of the piston rod 32, the fitting length of the restricting portion 7 with respect to the piston rod 32 becomes long, and the inclination of the spring receiving portion 7b can be prevented. Consequently, inclination of the first spring 5 and the second spring 6 can be suppressed.

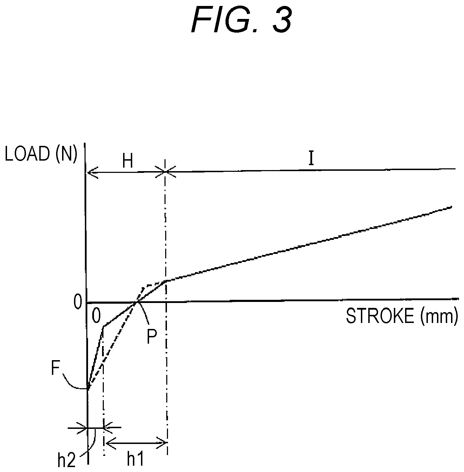

Hereinafter, the operation of the spring member 4 functioning as an extension spring will be described with reference to Fig. 3.

In Fig. 3, the spring characteristics of the damper D1 as a whole in a partial stroke region including a stroke region H in which the spring member 4 functions out of the entire stroke region of the damper D1 are indicated by a solid line. Furthermore, in Fig. 3, spring characteristics in the case of using a conventional extension spring formed of a coil spring having a constant spring constant, instead of the spring member 4, are indicated by a dotted line.

Furthermore, in the following description, as illustrated in Fig. 3, the maximum extension of the damper D1 is used as a reference stroke amount (zero stroke amount), and the amount of contraction from the maximum extension is used as a stroke amount. That is, a decrease in the stroke amount means extension of the damper D1, whereas an increase in the stroke amount means contraction of the damper D1.

The spring member 4 according to the present embodiment is compressed in the stroke region H, which has a small stroke amount near the maximum extension including the maximum extension, to exert elastic force and bias the damper D1 in the contraction direction. The force for biasing the damper D1 in the contraction direction by the spring member 4 (biasing force in the contraction direction) is maximum at the maximum extension of the damper D1. By contrast, when the damper D1 is contracted and the stroke amount increases, the spring member 4 is fully extended at the end of the stroke region H, and the force is not exerted in a subsequent stroke region I.

The suspension spring 2 functions in substantially the entire stroke regions of the damper D1 and biases the damper D1 in the extension direction. Therefore, in the stroke region H, in which the spring member 4 functions, the spring characteristics of the damper D1 as a whole are combined characteristics of the spring characteristics of the spring member 4 and the spring characteristics of the suspension spring 2. However, in the stroke region I, after the spring member 4 is fully extended, the spring characteristics of the damper D1 as a whole are the spring characteristics of the suspension spring 2.

The force for biasing the damper D1 in the extension direction by the suspension spring 2 (biasing force in the extension direction) becomes maximum at the maximum contraction of the damper D1, and decreases with a decrease in the stroke amount, that is, extension of the damper D1. In the middle of the stroke region H, in which the spring member 4 functions (stroke amount P in Fig. 3), the biasing force in the contraction direction by the spring member 4 balances with the biasing force in the extension direction by the suspension spring 2, and the damper D1 is further extended, the biasing force in the contraction direction by the spring member 4 exceeds the biasing force in the extension direction by the suspension spring 2. Then, the damper D1 as a whole exerts force in the contraction direction, and the extension speed (piston speed) of the damper D1 can be reduced by this force in the contraction direction. Therefore, impact at the maximum extension of damper D1 can be relieved.

Furthermore, in a region h1 on the contraction side in the stroke region H, in which the spring member 4 functions, the amount of contraction of the spring member 4 is small and the contraction of the first spring 5 is not restricted by the restricting portion 7. Therefore, in the region h1, the spring constant of the spring member 4 is the total spring constant of the first spring 5 and the second spring 6, which are connected in series. By contrast, in a region h2 on the extension side in the stroke region H, in which the spring member 4 functions, the amount of contraction of the spring member 4 is larger and the contraction of the first spring 5 is restricted by the restricting portion 7. Accordingly, in this region h2, the spring constant of the spring member 4 is the spring constant of the second spring 6 alone, and is larger than the spring constant in the region h1 on the contraction side.

Thus, the spring characteristics of the spring member 4 are two-step characteristics in which the spring constant in the region h1 on the contraction side is smaller. Therefore, it is possible to prevent the spring characteristics of the damper D1 as a whole from changing suddenly at the full extension of the spring member 4. In other words, the spring characteristic in the stroke region H, in which the spring member 4 functions, and the spring characteristic of the suspension spring 2 in the stroke region I can be smoothly connected.

Furthermore, even if the spring constant of the spring member 4 in the region h2 on the contraction side is reduced, the spring constant of the spring member 4 is large in the region h2 on the extension side. Therefore, force (F in Fig. 3) against compression at the maximum extension of the damper D1 can be ensured without changing the stroke amount P, at which the biasing force in the contraction direction by the spring member 4 and the biasing force in the extension direction by the suspension spring 2 are balanced and the force exerted by the damper D1 becomes zero, from that with an extension spring having a constant spring constant (dotted line in Fig. 3).

In addition, when the spring characteristics of the spring member 4 functioning as an extension spring are two-step characteristics, it is possible to reduce the spring constant when the stroke amount of the damper D1 is the stroke amount P. This is particularly effective when the front fork carrying the damper D1 is used for a motocross competition vehicle.

This is because in motocross competitions, there are many opportunities for the wheels to leave the ground. More specifically, the damper D1 is not loaded when the wheel is lifted from the ground. In such an unloaded state, the damper D1 is in a contracted state until the stroke amount P is reached. Therefore, at the time of landing, contraction is started from the state where the damper D1 reaches substantially the stroke amount P. If the spring constant at the stroke amount P is reduced, the damper D1 is easily contracted at the start of the contraction and alleviates impact at the time of landing, whereby the impact the occupants receive can be relieved.

Hereinafter, the operation and effects of the damper D1 according to the present embodiment will be described. In the present embodiment, the damper D1 includes the damper body 3 that includes the cylinder 30 and the piston rod 32 axially movably inserted in the cylinder 30, and the spring member 4 that is provided the outer circumference of the piston rod 32 and between the piston 31 and the rod guide 33 coming close to each other when the damper body 3 is being extended and biases the piston 31 and the rod guide 33 in a direction to separate them from each other when compressed. The spring member 4 includes the first spring 5, the second spring 6 arranged in series with the first spring 5, and the restricting portion 7 that restricts the contraction of the first spring 5 before the first spring 5 and the second spring 6 reach their close contact heights.

With the above-described configuration, the spring member 4 can bias the damper D1 in the contraction direction in the stroke region H, in which the spring member 4 functions. Furthermore, since the spring constant of the spring member 4 can be switched when the contraction of the first spring 5 is restricted by the restricting portion 7, the spring characteristics of the spring member 4 can be two-step characteristics.

Furthermore, even if the spring characteristics of the spring member 4 are thus two-stage characteristics, since the first spring 5 and the second spring 6 are arranged in series, the spring member 4 does not become bulky radially and it is easy to reserve the mounting space for the spring member 4. Furthermore, since the restricting portion 7 prevents the first spring 5 from reaching its close contact height, it is possible to suppress buckling of the first spring 5.

Furthermore, with the above-described configuration, since the two springs of the first spring 5 and the second spring 6 are used to make the spring characteristics of the spring member 4 two-stage characteristics, a degree of freedom in design of the first spring 5 and the second spring 6 is improved, and the first spring 5 and the second spring 6 can be designed optimally according to a desired spring constant. Therefore, the weight of the spring member 4 can be reduced as compared to the case of using an unequally pitched coil spring.

Specifically, for example, in the case of using an unequally pitched coil spring to obtain two-stage spring characteristics, the spring constant is switched when the wire material of a small pitch portion with a smaller pitch is in close contact. However, when using such an unequally pitched coil spring, it is difficult to change the wire diameter of the coil spring. Therefore, for example, even if it is intended to reduce the spring constant of the small pitch portion, the wire diameter cannot be reduced in accordance with the spring constant, resulting in a large weight. By contrast, in the present embodiment, the spring member 4 includes two springs (the first spring 5 and the second spring 6) connected in series, and the wire diameter of each spring is not influenced by the other spring, whereby an increase in the weight can be suppressed.

From the above description, with the damper D1 according to the present embodiment, even if the spring characteristics of the spring member 4, which biases the damper D1 in the contraction direction in the predetermined stroke region H, are two-step characteristics, no problems such as the mounting space, buckling, or an increase in the weight occur. It is therefore easy to employ the spring member 4 having the two-step spring characteristics for the damper D1.

Furthermore, in the present embodiment, the restricting portion 7 includes the spring receiving portion 7b sandwiched between the first spring 5 and the second spring 6, and is slidably attached to the outer circumference of the piston rod 32. In this case, the restricting portion can be made smaller and lighter than in the case where the restricting portion is slidably attached to the inner circumference of the cylinder 30. In addition, since the restricting portion 7 is installed while being attached to the outer circumference of the piston rod 32, installation of the restricting portion 7 is facilitated.

Furthermore, in the present embodiment, the spring member 4 is provided inside the cylinder 30, and the restricting portion 7 includes the guide 7a connected to the spring receiving portion 7b and disposed between the first spring 5 and the cylinder 30. The guide 7a prevents the upper end (end opposite to the second spring 6 side) of the first spring 5 from moving to the lower side (spring receiving portion 7b side) than the upper end (end opposite to the spring receiving portion 7b) of the guide 7a.

In other words, the restricting portion 7 according to the present embodiment prevents the axial length of the first spring 5 from becoming equal to or less than the length of the guide 7a projecting from the spring receiving portion 7b, thereby restricting contraction of the first spring 5. That is, in the first spring 5, since the substantially extendable and contractible region is limited to the portion projecting from the guide 7a, it is easy to set the contractible amount of the first spring 5. In addition, in the present embodiment, the guide 7a is slidably attached to the outer circumference of the piston rod 32. For this reason, the fitting length of the restricting portion 7 and the piston rod 32 is long, whereby inclination of the spring receiving portion 7b can be prevented. Consequently, inclination of the first spring 5 and the second spring 6 can be suppressed.

As long as the first spring 5 can be compressed and the contraction of the first spring 5 can be restricted before the first spring 5 reaches its close contact height, the configuration of the restricting portion 7 can be changed as appropriate. For example, by making the gap between the guide 7a and the first spring 5 smaller than the gap between the first spring 5 and the cylinder 30, the first spring 5 comes into contact with the guide 7a before contacting the cylinder 30 even if buckling occurs in the first spring 5. Thus, the inner circumference of the cylinder 30 can be reliably prevented from being damaged because of the buckling.

In the present embodiment, since the guide 7a is cylindrical and the first spring 5 is a coil spring, to make the distance between the guide 7a and the first spring 5 smaller than the distance between the first spring 5 and the cylinder 30, the difference between the outer diameter of the guide 7a and the inner diameter of the first spring 5 is set smaller than the difference between the outer diameter of the first spring 5 and the inner diameter of the cylinder 30. However, if buckling can be sufficiently suppressed by the restriction of the contraction of the first spring 5, the distance of the gaps formed between the guide 7a, the first spring 5, and the cylinder 30 can be changed as appropriate.

Furthermore, the guide 7a may be provided on the outer side (the side opposite to the piston rod 32) of the first spring 5 and the restricting portion may be in sliding contact with the inner circumference of the cylinder 30. Furthermore, the guide 7a is not necessarily cylindrical, and for example, a plurality of plate members rising along the axial direction of the first spring 5 may be arranged in the circumferential direction of the first spring 5.

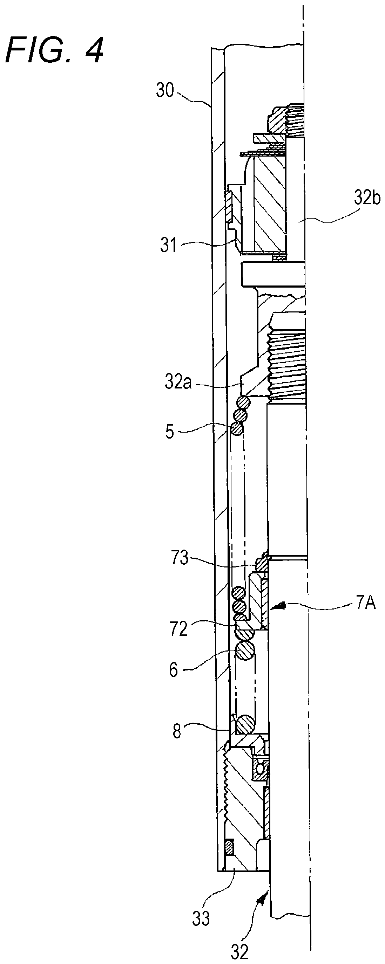

Furthermore, as in the restricting portion 7A illustrated in Fig. 4, a restricting portion 7A may be divided into a spring receiving portion 72 slidably attached to the outer circumference of the piston rod 32 and a stopper portion 73 fixed to the outer circumference of the piston rod 32 and blocking movement of the spring receiving portion 72 with respect to the piston rod 32. In this case, when the stopper portion 73 blocks movement of the spring receiving portion 72, contraction of the first spring 5 is restricted.

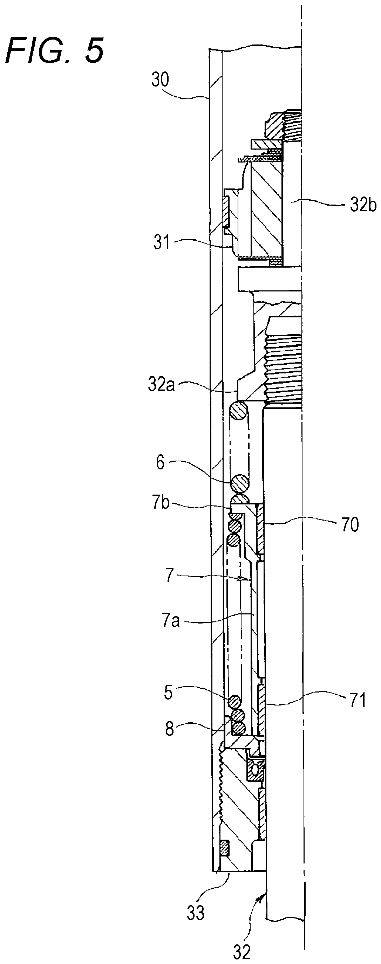

Furthermore, in the present embodiment, the first spring 5 is provided on the upper side (the piston 31 side) of the second spring 6. However, where to arrange the first spring 5 and the second spring 6 may be reversed. For example, as illustrated in Fig. 5, the first spring 5 may be provided on the lower side (the rod guide 33 side) of the second spring 6. Such a change can be made regardless of the configuration of the restricting portion.

In addition, the position at which the spring member 4 is provided can be changed as appropriate. More specifically, it suffices if the spring member 4 is provided to the outer circumference of a shaft member in an extendable elastic member including a tube and the shaft member axially movably inserted in the tube, and between two members coming close to each other when the elastic member is being extended.

Specifically, in the present embodiment, the damper body 3 is made of an elastic member and includes the cylinder 30, the piston 31 slidably inserted in the cylinder 30, the piston rod 32 connected to the piston 31 and having a lower end (one end) protruding out of the cylinder 30, and the rod guide 33 provided at a lower end portion (one end portion)of the cylinder 30, and slidably supporting the piston rod 32. The cylinder 30 corresponds to the tube of the elastic member, the piston rod 32 corresponds to the shaft member of the elastic member, and the piston 31 and the rod guide 33 correspond to the two members coming close to each other when the elastic member is being extended. The spring member 4 is provided to the outer circumference of the piston rod 32 and between the piston 31 and the rod guide 33. It is therefore easy to mount the spring member 4.

However, for example, with the inner tube 11 serving as the tube of the elastic member and the cylinder 30 serving as the shaft member of the elastic member, the spring member 4 may be provided between the upper end portion of the inner tube 11 and the lower end portion of the cylinder 30 coming close to each other when the damper D1 is being extended and contracted. Such a change can be made regardless of the configuration of the restricting portion and the arrangement of the first spring and the second spring.

Furthermore, in the present embodiment, the spring member 4 functions as an extension spring. Therefore, when the damper D1 is used for a front fork of a motorcycle used for motocross competition, it is particularly effective because the damper D1 favorably starts moving at landing and has a high effect of alleviating impact at landing.

In addition, the use of the damper D1 and the spring member 4 can be changed as appropriate. For example, the damper D1 may be used for vehicles other than motorcycles, and may be used for suspension systems other than front forks. Furthermore, as in a damper D2 according to a second embodiment, the spring member may be used as a balance spring, and a predetermined stroke region in which the spring member functions can be set according to the application of the spring member. These changes can be made regardless of the configuration of the restricting portion, the arrangement of the first spring and the second spring, and the position to which the spring member is provided.

### <Second Embodiment>

Next, the damper D2 according to the second embodiment of the present invention will be described. As illustrated in Fig. 6, the damper D2 according to the present embodiment differs from that in the first embodiment in that the suspension spring 2 formed of a coil spring according to the first embodiment is replaced with an air spring 2A, and the spring member 4 functioning as an extension spring according to the first embodiment is replaced with a spring member 4A functioning as a balance spring.

Hereinafter, differences in the configuration of the damper D2 according to the present embodiment from the damper D1 of the first embodiment will be described in detail, and the same or corresponding configurations will be denoted with the same reference numerals and a detailed description thereof will be omitted.

A liquid is stored in a space between the inside of the tube member 1 and the damper body 3, and an air chamber G is formed above the liquid surface. The air chamber G is enclosed in a compressed state. The pressure in the air chamber G separates the outer tube 10 and the inner tube 11 and biases the damper D2 in the extension direction. In the present embodiment, the air spring 2A has the air chamber G, and the air spring 2A functions as a suspension spring that elastically supports the vehicle body.

Subsequently, the spring member 4A is provided between the piston 31 and the rod guide 33 like the spring member 4 according to the first embodiment, and when compressed, exerts elastic force to bias the damper D2 in the contraction direction. In the present embodiment, the spring member 4A functions as a balance spring. The balance spring is a spring used to offset the elastic force of an air spring, used as a suspension spring that elastically supports a vehicle body, at the maximum extension of a damper.

Thus, although the function of the spring member 4A differs from that of the spring member 4 according to the first embodiment, the structure of the spring member 4A is the same as the spring member 4 according to the first embodiment, and includes the first spring 5, the second spring 6 arranged in series with the first spring 5, and the restricting portion 7 that restricts contraction of the first spring 5 before the first spring 5 and the second spring 6 reach their close contact heights. Therefore, a detailed explanation about the compositions of the spring member 4A is omitted.

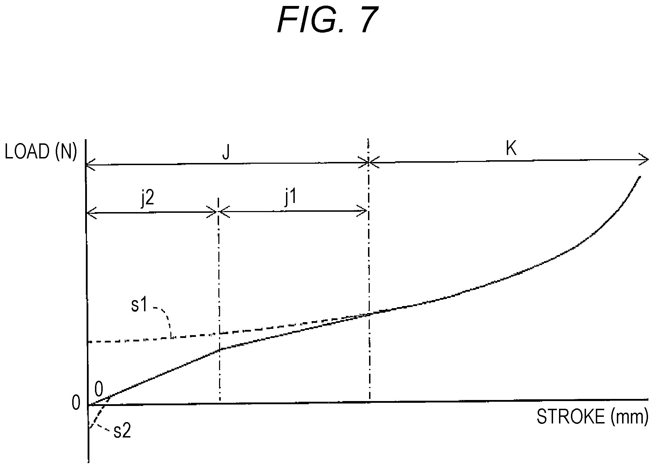

Hereinafter, the operation of the spring member 4A functioning as a balance spring will be described with reference to Fig. 7.

Assuming that the stroke region until the damper D2 in the maximum extension state is fully contracted is a full stroke region, the spring member 4A according to the present embodiment is compressed in a first half stroke region J of the entire stroke region to exert elastic force and bias the damper D2 in the contraction direction. The force for biasing the damper D2 in the contraction direction by the spring member 4A (biasing force in the contraction direction) becomes excessive at the maximum extension of the damper D2. Conversely, when the damper D2 is contracted and the stroke amount increases, the spring member 4A is fully extended at the end of the stroke region J and does not exert the force in a second half stroke region K.

By contrast, the air spring 2A functioning as a suspension spring functions in the entire stroke region of the damper D2 to bias the damper D2 in the extension direction. Therefore, in the stroke region J, in which the spring member 4A functions, the spring characteristics of the damper D2 as a whole are a combination of the spring characteristics of the spring member 4A and the spring characteristics of the air spring 2A. However, in the stroke region K after the spring member 4A is fully extended, the spring characteristics of the damper D2 as a whole are the spring characteristics of the air spring 2A.

The force for biasing the damper D2 in the extension direction by the air spring 2A (biasing force in the extension direction) becomes maximum at the maximum contraction of the damper D2, and decreases with a decrease in the stroke amount, that is, contraction of the damper D2. The spring characteristics of the air spring 2A are nonlinear characteristics and are not proportional characteristics in which the elastic force increases in proportion to the stroke amount as with a suspension spring formed of a coil spring (for example, the suspension spring 2 in Fig. 1).

Therefore, if the spring characteristics of the suspension spring formed of the air spring 2A are set in accordance with the characteristics of the second half stroke region K, in the damper without a balance spring, force in the extension direction is excessive (dotted line s1 in Fig. 7) of the damper as a whole in the first half stroke region J, which may deteriorate the ride quality of the vehicle. By contrast, the damper D2 according to the present embodiment includes the spring member 4A functioning as a balance spring, and the elastic force of the balance spring (spring member 4A) offsets the elastic force of the air spring 2A at the maximum extension of the damper D2. It is therefore possible to prevent the force in the extension direction of the damper D2 as a whole from being excessive in the stroke region J, whereby the ride quality of the vehicle can be improved.

Within the stroke region J, in which the spring member 4A functions, in a region j1 on the contraction side in which contraction of the first spring 5 is not restricted by the restricting portion 7, the spring constant of the spring member 4A is the total spring constant of the first spring 5 and the second spring 6, which are connected in series. Within the stroke region J, in which the spring member 4A functions, in a region j2 on the extension side in which contraction of the first spring 5 is restricted by the restricting portion 7, the spring constant of the spring member 4A is the spring constant of the second spring 6 alone and is larger than the spring constant in the region j1 on the contraction side.

Thus, the spring characteristics of the spring member 4A are two-step characteristics in which the spring constant in the region j1 on the contraction side is smaller. Therefore, it is possible to prevent the spring constant of the damper D2 as a whole from changing suddenly at the full extension of the spring member 4A. In other words, the spring characteristic in the stroke region J, in which the spring member 4A functions, and the spring characteristic of the air spring 2A in the stroke region K can be smoothly connected. Thus, the ride quality of the vehicle can be improved.

Furthermore, the damper D2 according to the present embodiment includes an extension spring (not illustrated) in addition to the spring member 4A functioning as a balance spring, and the extension spring can relieve impact from the damper D2 at the maximum extension (dotted line s2 in Fig. 7).

Hereinafter, the operation and effects of the damper D2 according to the present embodiment will be described. The same configurations as in the first embodiment have the same effects, and the same changes can be made, and a detailed description therefor is omitted here.

In the present embodiment, the damper D2 includes the air spring 2A that biases the damper body (elastic member) 3 in the extension direction by the pressure in the air chamber G, and the spring member 4A according to the present embodiment functions as a balance spring that exerts elastic force offsetting the elastic force of the air spring 2A at the maximum extension of the damper D2. The spring member 4A functioning as a balance spring includes the first spring 5, the second spring 6, and the restricting portion 7, and has two-step spring characteristics.

Therefore, the spring characteristic in the stroke region J, in which the balance spring functions, and the spring characteristic in the stroke region K, which is the spring characteristic of the air spring 2A can be smoothly connected, whereby the ride quality of the vehicle can be improved.

While the stroke region J, in which the spring member 4A as a balance spring functions, is about half the entire stroke region on the extension side of the damper D2 in the present embodiment, the region can be changed as appropriate. Furthermore, as described above, the application of the spring member 4A can also be changed as appropriate.

For example, the spring member according to the present invention may have both the function as an extension spring and the function as a balance spring. Specifically, the first spring 5 and the second spring 6 may together function as a balance spring, and the second spring 6 alone may function as an extension spring. In this case, unlike the conventional damper disclosed in JP 2010-185572 A, the extension spring and the balance spring are not necessarily arranged in parallel.

Some conventional dampers including an extension spring and a balance spring have both the extension spring and the balance spring provided in parallel in the cylinder, but the space for mounting the extension spring and the balance spring in parallel cannot be reserved in the cylinder in some cases. In such a case, the extension spring may be provided in the cylinder and the balance spring may be provided outside the cylinder. However, even in such a case, the gap between the cylinder and the tube member is small, which makes it difficult to reserve the mounting space for the balance spring, or makes the structure complicated if the balance spring is mounted at a position axially offset from the cylinder.

To address this, in the case where the spring member according to the present invention serves as both the extension spring and the balance spring, it is easy to reserve the mounting space and the structure is not complicated. Such a change in the application of the spring member can be made regardless of the configuration of the restricting portion, the arrangement of the first spring and the second spring, the position to which the spring member is provided, and the application of the damper.

While preferred embodiments of the present invention have been described above in detail, modifications, variations and changes can be made without departing from the scope of the claims.

The present application claims priority based on Japanese Patent Application No. 2017-120113 filed on June 20, 2018, with the Japan Patent Office, and the entire content of this application is incorporated herein by reference.

## Claims

1. A damper comprising:
an elastic member including a tube and a shaft member axially movably inserted into the tube; and
a spring member that is provided on an outer circumference of the shaft member and between two members coming close to each other when the elastic member is being extended, and biases the two members in a direction to separate the two members from each other when compressed,
the spring member including a first spring, a second spring that is arranged in series with the first spring, and a restricting portion that restricts contraction of the first spring before the first spring and the second spring reach close contact heights of the first spring and the second spring.

2. The damper according to claim 1, wherein
the restricting portion includes a spring receiving portion sandwiched between the first spring and the second spring, and is slidably attached on the outer circumference of the shaft member.

3. The damper according to claim 2, wherein
the spring member is provided inside the tube,
the restricting portion includes a guide connected to the spring receiving portion and disposed between the first spring and the shaft member,
the guide prevents an end of the first spring on a side opposite to the second spring from moving toward the spring receiving portion with respect to an end of the guide on a side opposite to the spring receiving portion, and
a gap between the guide and the first spring is smaller than a gap between the first spring and the tube.

4. The damper according to claim 1, wherein
the spring member functions as an extension spring that relieves impact at maximum extension.

5. The damper according to claim 1, comprising
an air spring that biases the elastic member in an extension direction by pressure in an air chamber, wherein
the spring member functions as a balance spring that exerts elastic force offsetting elastic force of the air spring at maximum extension.

6. The damper according to claim 1, wherein
the elastic member is a damper body including a cylinder, a piston slidably inserted in the cylinder, a piston rod connected to the piston and having one end projecting out of the cylinder, and a rod guide provided to one end portion of the cylinder and slidably supporting the piston rod,
the tube is the cylinder,
the shaft member is the piston rod, and
the spring member is provided on an outer circumference of the piston rod and between the piston and the rod guide.
